(19) Europäisches Patentamt

European Patent Office

Office européen des brevets

(11) **EP 3 511 795 A1**

## (12) EUROPEAN PATENT APPLICATION

(43) Date of publication:
**17.07.2019 Bulletin 2019/29**

(51) Int Cl.:
***G05B 23/02*** *(2006.01)*

(21) Application number: **18151439.9**

(22) Date of filing: **12.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Siemens Aktiengesellschaft
80333 München (DE)**

(72) Inventors:
- **Batsiukov, Kiryl
  81379 München (DE)**
- **Fishkin, Alexey
  81827 München (DE)**
- **Huang, Yi
  85570 Markt Schwaben (DE)**
- **Roshchin, Mikhail
  81925 München (DE)**

## (54) INDUSTRIAL PROCESS DATA PROCESSING

(57) Present invention concerns a method and a system for processing data related to an industrial process. The method comprises steps of acquiring a parameter related to the industrial process; of pre-processing the acquired parameter; and of providing the pre-processed parameter. In this, pre-processing comprises an operation that is carried out solely on said acquired parameter.

FIG 4

**Description**

Present invention concerns the processing of data acquired from an industrial process. More specifically present invention concerns low level data management.

Background of the Invention

An industrial application comprises a machine performing a predetermined task. The machine may for instance be relatively simple like an electric motor, a valve or an electric magnet. In a more complex example, the machine may comprise an injection moulding press, an industrial robot or a bottling plant. The machine may be composed of an arrangement of other machines and several machines may work together to form a system. In order to control the operation of the overall machine or system it is often necessary to control several of its parts. This may be true for machine operation as well as for securing machine availability. To this ends, machine data related to the process may be collected and processed.

An industrial machine may be equipped with one or more contraptions that pick up at least one operational parameter regularly or on an event driven basis. The acquired data may be stored for a predetermined time and processing may take place on stored data. The number of data points taken on an industrial machine has increased lately and may exceed 200 even for a simpler machine like an electric motor, wherein each point represents one operation- or environment-related parameter of the motor. Given a good understanding of the machine, the acquired data may permit determination of complex parameters like a remaining machine life time.

The data picked up from more than one industrial machine may be put to more use through combined data analysis. By comparing performance of machines of similar or the same type employed for different purposes or in different environments, machine stress and component wear out may be analysed. Production data of one machine may be related to that of a different machine on the same plant. Complex and high level data analysis may lead to completely new insights and perspectives.

It is an objective of present invention to provide a general processing technique for industrial process data, in order to provide insight into the process or into the operation of a machine implementing the process, as well as to facilitate successive higher level processing. The invention solves the given objective through the subject matter defined in independent claims. Preferred embodiments are given in dependent claims.

Disclosure of the Invention

Present invention concerns a method and a system for processing data related to an industrial process. The method comprises steps of acquiring a parameter related to the industrial process; of pre-processing the acquired parameter; and of providing the pre-processed parameter. In this, pre-processing comprises an operation that is carried out solely on said acquired parameter.

By restricting data processing to the parameter in question no or very little knowledge on the meaning or desired behaviour of the parameter is required. General data pre-processing may be performed that addresses common problems like measurement noise, sensor defects or data outliers. Design and implementation of successive processing may be facilitated by the provided pre-processed data. Existing successive processing may also profit from the proposed data pre-processing in either offering another level of data checking or removing need for application-side data pre-processing.

Proposed pre-processing may help to cleanse noisy data that should be not included in data analytics tasks, can be used to judge the data quality and gain a first feeling and understanding of the distribution of data at hand.

Successive processing may open improved control over or insight into the process. In this, several process-related parameters may be processed together. One or more parameters may stem from an external data source that is not exclusively related to the process, yielding information like the availability of a required crude material or the remaining capacity of a warehouse for conceiving produced goods. Successive processing is generally done on the basis of a model of said process or a part of it and makes use of the meaning of the processed parameter.

Pre-processing may be performed on a plurality of time-related acquisitions of the same parameter. Acquisitions may be made in time intervals and/or in response to a predetermined event. The time series of the parameter may allow application of statistical methods without requiring consideration of other parameters. Analysis may comprise continuity or deviance checks as well as determination of temporal behaviour.

The parameter may be provided in response to a corresponding request. The request may indicate the sought parameter, a time or time interval and/or other side conditions like an acquisition frequency in the given time interval. Optionally, extended parameterization and/or sequence of data tests or pre-processing steps may be configurable. Accepting a parameter request as well as providing the parameter may be part of a predetermined interface, especially a data and/or control interface between computer processes or applications. Such an interface may also be called application program interface (API). Request and response formats may be well defined and are preferred to be published openly, such as to allow for easy development and use of above-mentioned successive processing.

Pre-processing may be performed on acquisitions of a plurality of parameters, each acquisition being related to the industrial process and to time, wherein a plurality of pre-processed parameters are provided, the parameters being related to the same predetermined time span. In other words pre-processing may provide synchronized acquisitions of different parameters. Out of m parameters, n parameters may be provided synchronized, provided that $n \leq m$ and the set of acquired parameters comprises the complete set of requested parameters. Where two parameters are not acquired synchronously, a value for one of the parameters may be interpolated from former or latter acquisitions. Alternatively, the closest-in-time acquisition may be provided. Should this acquisition be more than a predetermined time span away from a desired point in time, a notification may be raised.

The operation may comprise determination of a predetermined condition on the acquired parameter and the issuing of a signal if the condition is met. In one option, an indication whether or not the condition is met may be given as part of the response to above-mentioned request or can be polled. In another option, pre-processing watches over whether or not incoming data fulfils the predetermined condition and may give out a notification if the fulfilment status changes, e.g. when the condition starts or stops to be fulfilled. The condition may recursively comprise another condition. Each condition may comprise a comparison between a predetermined threshold and an acquisition or a parameter derived from several acquisitions of the same parameter, such as a median, a moving or total average. Thereby a signal that is represented by a time series of acquisitions may be validated so that usable information can be told from doubtful or invalid information. Common issues in time series data may be identified and, if desired, automatically corrected.

The parameter may be acquired by means of a sensor wherein the operation comprises a determination of sensor functionality. Sensor functionality also known as sensor health comprises an indication if or to what degree the sensor is able to deliver meaningful data. Should the sensor for instance suffer from overheating, wear, increased tolerances, vibration or an electrical connection problem, affected data may be sorted out and a corresponding alert may be generated that indicates the faulty sensor. Understanding, analysis or control of the process may thus be improved and incorrect findings may be avoided.

The operation may comprise a determination whether the acquired parameter lies on a predetermined side of a predetermined threshold. It may be determined if the parameter or acquisitions thereof lie above or below a first threshold. The parameter may also be compared to two different thresholds such as to see if the parameter acquisitions lie in a window defined by the thresholds. Such a filter may also be called window discriminator or bandpass. Should an acquisition take on an unusual value, the cause of the observed effect may be inquired. Processing of the parameter may be paused or adjusted.

The operation may also comprise a determination whether the acquired parameter lies off a predetermined majority of acquisitions of said parameter. Data outliers, which are common on certain data, may thus be identified and corrected or dropped or a notification may be generated. Outlier detection determination may comprise statistical operations, several of which are known in the art. In one option, the standard deviation of an acquisition may be determined and should the standard deviation exceed a predetermined threshold, a notification may be generated. The empiric average of the parameter may be determined in any desired fashion. In yet another option the predetermined threshold may be determined as the variance of acquisitions of said parameter over time.

The operation may furthermore comprise a determination whether the acquired parameter changes more than a predetermined amount over a predetermined time. Should a swift change of acquisitions be detected, a notification indicative of said deviation ("spike alert") may be generated. Certain data, especially stemming from a measurement, may thus be cleaned from errors.

The operation may also comprise a determination whether a variation of acquisitions of the parameter compared to an average value exceeds a predetermined threshold. Should the acquisitions describe a positive or negative step, a corresponding notification may be generated. The time over which the step occurs and/or the absolute or relative change of the acquired value may be configurable or predetermined. The cause of such a change may thus be inquired promptly.

The operation may comprise a determination whether the acquired parameter deviates more than a predetermined amount from a predetermined temporal pattern. The temporal pattern may be given in absolute form or generated on the basis of a time series analysis of parameter acquisitions. The pattern may comprise an offset, a frequency or a trend, which may be repetitive. This way, a partly or fully automated data monitoring and possibly a notification, correction or dropping of faulty data may be implemented. The threshold may be self-adjusting so that good data protection can be achieved with little or no configuration.

Another determination the operation may comprise is whether the time between successive acquisitions exceeds a predetermined amount. A data gap, especially in a time-related series, may be identified. A notification may be generated. The data gap may be filled with generated data, especially interpolated data from a time series.

The process may be controlled on the basis of the pre-processed parameter. A controlling method may use pre-processed data instead of raw data, wherein the controlling method may follow any desired practice.

A system for processing data concerning an industrial process comprises a computing platform, the computing platform having a data interface that is connectable, via a wide area data network, to a physical entity. In this, the physical entity is adapted to provide an acquisition of a parameter that is related to said process and the platform is adapted to carry out a method disclosed herein. The system may thus be used to supervise or control the process or to gain further insights into how it functions or behaves. Advantages or features of the system or device may apply to the method and vice versa.

The invention is intended to be used in the context of industrial processes that are monitored, controlled or networked with methods commonly subsumed as "Industry 4.0". That is, process related data may be acquired wherever a part of the process is executed and acquired information may be sent to a centralized service that stores and/or processes the data. Centralized processing allows improved scaling of hardware and processing of information coming from distributed sources. A comprehensive view on the industrial process in question may more easily be gained.

In the system, the physical entity may comprise a data acquisition unit located in a domain where the process is carried out, the data acquisition unit comprising at least one interface connectable to a sensor that is adapted to acquire said parameter. The data acquisition unit may help to collect and provide information relevant for said process.

Brief Summary of the Enclosed Figures

The above-described properties, features and advantages of present invention as well as the way they are achieved will be made clearer and better understandable in the light of the following discussion, making reference to exemplary embodiments shown in accompanying Figures, in which

Figure 1        shows data processing for one or more industrial systems;
Figure 2        shows a flow chart of an exemplary method for processing data of an industrial process;
Figure 3        shows an exemplary block diagram of an interface between services
Figure 4        shows a first exemplary application of the architecture of Figure 3;
Figure 5        shows a second application of the architecture indicated in Figure 3;
Figure 6        shows exemplary problems on figurative data; and
Figures 7-9     show more exemplary problems on figurative data.

Detailed Exemplary Embodiments of the Invention

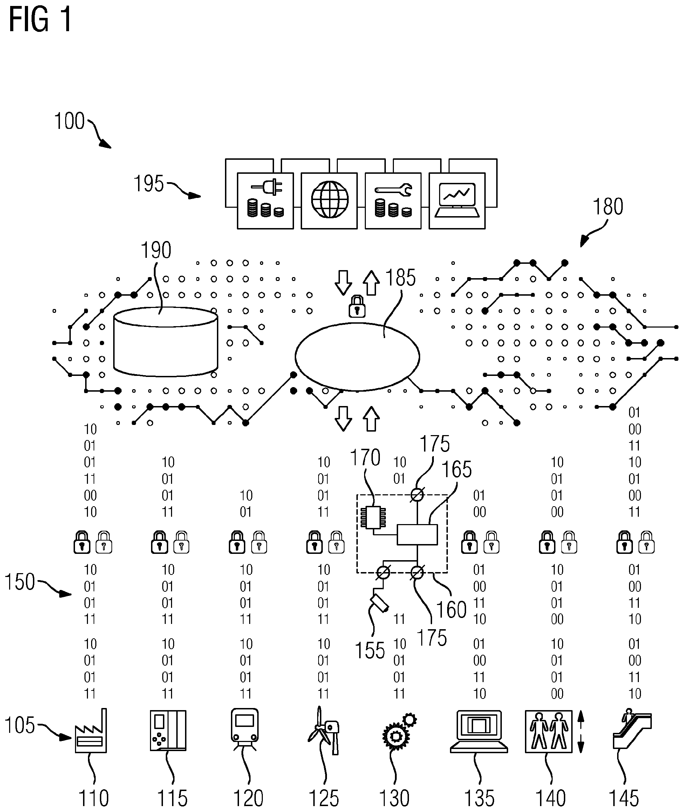

Figure 1 shows a system 100 for data processing for one or more industrial processes 105. Exemplary industrial processes 105 shown in the bottom section of Figure 1 include industrial processing 110, building technology 115, mobility 120, wind power 125, industrial drives 130, health care applications 135, an elevator 140 and an escalator 145. More possible processes 105 include smart city applications, energy management or digital factory. The given selection of industry processes 105 is exemplary and non-limiting. Also, process 105 classification is paradigmatic and a given industrial process 105 may comprise elements of more than one of the given processes 105.

Complexity of a process 105 and deviation of the process 105 from a general approach may differ greatly in different fields. While for instance variance between any two given escalator 145 processes may be limited, process variance in industrial processing 110 may be very high and depend on an object that is to be processed or manufactured. For managing the process 105, high level functionality like determination of expected machinery lifetime, cost factor estimation or supply chain management may require a data model for the process 105 or a class of services 105 the service 105 at hand is part of.

Each process 105 yields data 150 that describes the operation of a technical contraption like a machine, a system, a plant or a production system. Such data may comprise an item count, a speed of movement, acceleration, a temperature, a pressure, a force or torque, a current, a voltage, a distance or any other parameter that is related to the process 105 at hand. Some of the data 150 may already be available in the process 105 in digital form, for instance an ambient temperature that is measured by a different system or a rotational speed requirement. Other data 150 may be sampled with the help of a dedicated sensor 155 and/or a sampling unit 160. The sampling unit 160 may comprise a computational unit 165, local memory 170 and/or interfaces 175 to the contraption at hand, the sensor 155 or a remote data processing entity 180. It is preferred that the machine and/or the sampling unit 165 is adapted to exchange data 150 with the remote data processing entity 180 in encrypted form.

The sampling unit 160 may comprise a microcomputer or microcontroller adapted for digital data processing, especially in the form of the computational unit 165. A method for data processing disclosed herein may be available in form of a computer program product with program code means and the sampling unit 160 may be adapted to implement said method or a part of it by executing the program code means. The computer program product may be stored on a computer readable medium or be transferrable from one system to another by means of a wireless or wire bound data connection.

The processing entity 180 is preferred to implement a service 185 on any desired hardware, especially abstracted from the hardware as a cloud based service 185. This way, the physical location the service 185 is executed at and the physical resources allocated for the service 185 may vary transparently.

This may allow for improved resource scaling or location based servicing. The processing entity 180 may comprise a computational unit 165 and/or other elements discussed above with respect to sampling unit 160.

In one preferred option, the service 185 is part of a data processing environment that provides certain functionality for data 150 acquisition, storage, processing or provisioning. A preferred processing environment is known under the name MindSphere. The processing environment may run on top of a cloud service such as AWS (Amazon Web Services) or any other data processing platform.

The service 185 is preferred to have available a storage 190 like a database or a computer file system, especially for data 150. The storage 190 may be implemented on any desired hardware, including semiconductor memory or rotating media magnetic data storage. The storage 190 may itself be implemented as a service, especially a cloud based service, so that from the service's 185 point of view physical constraints or features of the implementation of the storage 190 like maximum capacity or physical location of data holding medium are of no concern and may not even be available. The data 150 is generally time-related in that the reading of a parameter has an associated time which may comprise a date and/or a time. A series of data 150 points over time may form a data series. Information in the storage 190 may be processed, compressed, swapped or dropped after it has been held for longer than a predetermined time or when an available amount of information exceeds a predetermined threshold.

It is proposed to provide the service 185 such that a higher level process 195 may request data 150 and the process 195 returns the requested data 150 in processed or pre-processed form. Request and/or response may be encrypted and/or authenticated. Processing of data 150 may take place after the actual request or at an earlier time after the data 150 is made available. Processed or partly processed data 150 may be stored in storage 190. Data 150 is called raw when it is unaltered from the form it is received from a machine, process 105 or unit 160 by the service 185. Data 150 is called pre-processed after it is made better processable without changing its meaning or context. Pre-processing may for instance identify or remove outliers, mark or fill data gaps, identify or compensate measurement noise or bias. Pre-processing may perform statistical operations on the raw data 150. Data 150 is called processed after several parameters have been combined, deeper statistical analysis has been performed or an altogether new parameter is provided on the basis of existing raw or pre-processed data 150.

The service 185 is preferred to provide pre-processed data on a process 105 to a higher level process 195 via an application program interface (API). Raw and/or processed data 150 may also be made available. The higher level process 195 may not need to worry about basic data processing like data smoothing, outlier detection, noise reduction or key factor determination.

It is proposed that the processing offered by the service 185 will generally be on an abstraction layer that is higher than data sampling and relaying but lower than modelling the underlying industrial process 105. It is especially preferred that the process 195 makes sense of the data 150 in context with a given process 105, while pre-processing or processing of service 185 may be targeted at the data 150 itself, not paying heed to what meaning it carries inside the process 105. Processing of the process 195 may comprise any desired numerical, symbolic or other processing. In one option, the process 195 is designed to provide a visualisation of the data 150, especially for human reception.

In one figurative example an industrial process 105 at hand comprises the fabrication of wooden planks out of timber with a lumber mill with an oscillating saw. Raw data 150 may comprise an oscillation frequency of the saw, the length of wood that has been cut since the last sharpening of the saw blade and the amount of wood that needs to be cut until a predetermined date. The raw data 150 may be pre-processed to be for instance noise-reduced, smoothed or checked to lie within a predetermined range. The data 150 may be further processed to yield a key performance indicator like the lumber mill utilization in per cent. Other processing may comprise trend prediction, calculation of an indirect signal or anomaly detection.

The data 150 provided to the higher level process 195 may form an improved basis on which said process 195 may control the process 105, react on a predetermined condition, relate the process 105 to another process 105 or use external data to gain improved insight or control over the process 105. Such processing generally requires knowledge on the process 105 and its implications and is often done using a mathematical model for said process 105.

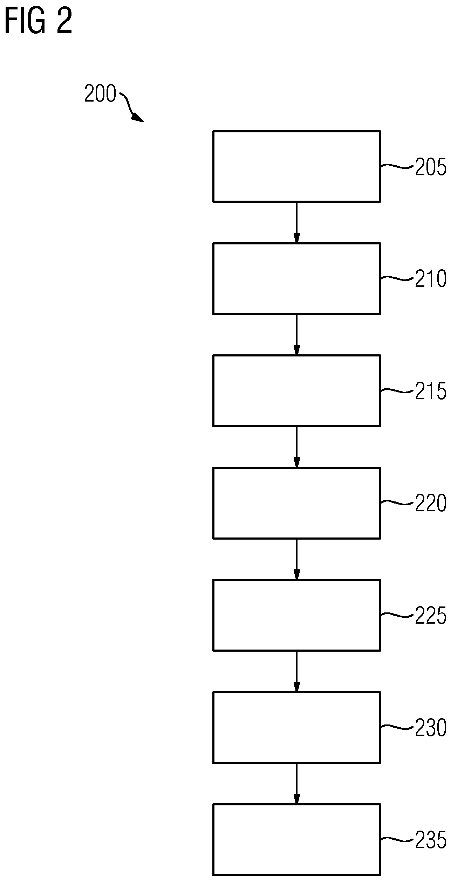

Figure 2 shows a flow chart of a method 200 for processing data concerning an industrial process 105. The method 200 is preferred to be adapted to run on a system 100 of the kind that is described with reference to Figure 1.

In a step 205, a parameter of the industrial process 105 may be acquired. Acquisition is generally the action of determining and/or providing an information or data 150, which is also called acquisition herein. The data 150 is preferred to comprise the value of a parameter, for instance a numerical value corresponding to a predetermined unit (like meters), expressing for example a distance. The data 150 may be time-related and an indication of the time corresponding to the data 150, like the sampling time, may be processed alongside the acquired data 150.

Acquisition may comprise retrieving digital or analog data 150 that is available in machinery the process 105 is running on or a device that is controlling the process 105. The industrial process 105 may comprise manufacturing a product on a manufacturing line and acquiring may for example comprise requesting a machine parameter from a production line controller controlling at least one machine on the line and evaluating a response. Acquiring may also comprise taking a measurement through use of a sensor 155. The sensor 155 may for instance be adapted to measure an angle, a length, a count, a position, a movement, a speed, an acceleration, a current, a voltage, a power, a force, an age or any other kind of measurable data 150. The measured parameter is preferred to stand in context with the process 105 and may for instance be part of a machine status or a processing status of an object that is being treated or manufactured. Acquisition may also comprise reading data 150 from a repository such as a storage 190 or a log file.

Acquisition may be triggered by polling, i.e. an external acquisition request, by an event, e.g. the change of a signal or parameter related to the process 105, or based on time, e.g. after a predetermined time since the last acquisition. It is preferred that a plurality of acquisitions can take place simultaneously or in small enough a period of time that temporal correlation between the acquisitions exists. Acquired data 150 may be pre-processed locally by a processing unit that is located in the domain of the process 105, like the sampling unit 160, but it is preferred that raw data 150 is passed from step 205 and pre-processing takes place at a later step of method 200 and possibly in a different physical location, like the processing entity 180. Data 150 is preferred to be formatted in JavaScript Object Notation (JSON).

In a step 210 the data 150 is preferred to be encrypted and may then be sent to the processing entity 180. Physical location of the processing entity 180 may be dynamic and transparent to external processes so that transfer of the data 150 may require a dynamic routing protocol. In a step 215 the transferred data may be received by the processing entity 180 and decrypted if necessary.

In an optional step 220 the received data 150 is stored, preferably in a storage 190 that is available to the processing entity 180 and to the service 185 running on top of it. Storing may also take place on pre-processed data 150. Data 150 from different processes 105 is preferred to be kept separate, for instance in different database tables and preferably with appropriate access control in place. Raw or pre-processed data 150 may be automatically deleted from the storage 190 after it has been retrieved for further processing. Data 150 may also be deleted after a predetermined keeping time, wherein different retention times may be defined for different processes 105 or different parameters of one process 105. Data deletion may also be dependent on available storage space (quota) or a state of the process 105. Should for example the process 105 get stopped and restarted, certain associated data 150 may be dropped from the storage 190. Deletion of stored data 150 may also be done upon request of a process 195. The storage 190 may be multi-tier in that it comprises several stages of memory that vary in access time and capacity. Fresh data 150 is generally stored in fast but small memory (e.g. RAM) and older data 150 may eventually get relocated into the next slower and larger memory (e.g. a rotating magnetic medium memory, a rotating optical medium or a streaming medium like a magnetic tape).

In an optional step 225 a request for data 150 is received. The request may especially come from a process 195 that is adapted to further process the requested data 150. The request may comprise an indication of a predetermined process 105, a point or period of time, one or more parameters and/or one or more conditions. It is preferred that a step 230 is then executed in order to retrieve and pre-process the requested data 150. In another variant of method 200 the pre-processing step 230 may take place before the data 150 retrieval request in step 225, wherein a pre-processing result is preferred to be stored in storage 190. Mixed operation is also possible in which some pre-processing is done independently of the data retrieval request and some is done in response to it.

Pre-processing is generally working on one or more acquisitions of the same parameter of the same process 105. The acquisitions may be analysed with statistic means and a comparison of an acquisition or a value derived from it with a predetermined threshold may take place. Derived values may also be accessible from the process 195 and especially comprise time series information such as sum, mean, moving average, standard deviation, median, moving median, quartile, mad, skewness, kurtosis etc.

The result of such comparison may be part of the requested data 150 or influence the way further processing of acquisitions is done. Exemplary pre-processing comprises missing value detection, range check, linear regression, boxplot, Tukey's boxplot, or signal transformation e.g. Fourier transformation, mean-standard based control chart with Western Electric (WE) Rules.

Linear regression may support an automatic mode in which a model is trained on the basis of time-dependent acquisitions and the model is then used to validate acquisitions of the same parameter. It may also support an interactive mode in which parameters of the model may be changed by the process 195 and corresponding model output be analysed. A model may be uploaded from the process 195 to the service 185 and be altered or deleted successively.

Pre-processing may yield data 150 in a format that permits its graphic representation like in a graphic tend line or a different type of chart. Data 150 may be provided in rows and columns wherein one dimension may relate to above-mentioned acquisition time. Data 150 may concern univariate or multi-variate values.

In an optional step 235 a response to the request of 225 is prepared and provided. The response may comprise the estemated parameter of data 150 and optionally additional information. The requesting process 195 may then latch onto the provided data 150 and process it further. A result of said processing may be used to control the process 105. In one option, the process 105 may be directly controlled depending on pre-processed data 150.

In some embodiments of present invention it is possible that data 150 is provided independently of a retrieval request 225. This may be the case if at least some pre-processing 230 takes place automatically on data 150 coming in from the process 105. Such pre-processing may provide pre-determined data 150 that is then relayed to a predetermined process 195. This operation may be started by the process 195 issuing a data subscription to the service 185, wherein the subscription may comprise the kind and frequency of the desired data 150 as well as the preferred pre-processing. In another example automatic pre-processing of incoming data 150 may lead to the detection of a predetermined condition like a temporal gap in otherwise time-continuous data 150, the development of an unexpected trend in acquisitions of data 150 or the transgression of a predetermined or automatic threshold. In such a case a notification may be provided to the process 195. As described above, the conditions of automatic processing may be determined by the process 195 and subscription to a predetermined event may be configured through a corresponding request.

It is preferred that between the process 195 and the process 185 an API is defined that allows exchange of data 150 and, in some embodiments, information controlling this exchange or the way the data 150 is provided. The API is preferred to follow the Representational State Transfer (REST) paradigm. The service 185 may especially be realized as a web service and the process 195 may communicate with it over an application protocol like Hypertext Transfer Protocol (HTTP). Exchanged data 150 may be encoded in JSON.

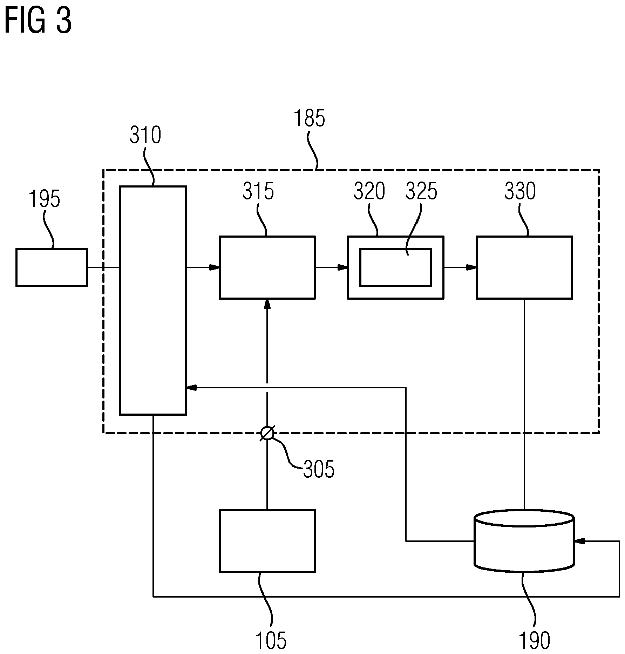

Figure 3 shows an exemplary block diagram of an architecture 300 of services 185 and 195 in system 100 of Figure 1. Items displayed in Figure 3 are preferred to be implemented as functional components of service 185 where applicable. The service 185 has a first interface 305 to process 105 and a second interface 310 to process 195. The second interface 310 is preferred to comprise a REST implementation and furthermore to support at least the POST, GET and DELETE commands. Although REST strictly does not use session states a token may be used for service access after authentication, which may be based on predetermined credentials. The token may be provided to process 195 by service 185 upon successful authentication. Subsequent requests of the process 195 may require the token to be sent to the service 185 in order to gain access to predetermined service resources like a service function or data 150.

A time series reader 315 may be adapted to receive acquisitions of a temporal series of data 150 of a parameter of process 105 and relay the acquisitions to a validator 320. The validator 320 is adapted to host a model 325 that may be predetermined, selected, uploaded or configured, for instance through process 195. The validator 325 may be adapted to train a given model 325 in a first mode of operation and to apply the model 325 to acquisitions in a second mode of operation. In some embodiments both modes may be executed in parallel. Depending on the result of applying the model 325 to the acquisitions an event may be generated by an event writer 330. Events may be stored in storage 190. A notification of an event may also be generated and provided to an interested party, for instance process 195, for asynchronous operation. The interface 310 may be used for event notification. Raw or pre-processed data 150 from the process 105 may be made available through said interface 310. Optionally, selected data 150 stored in storage 190 may be deleted through the interface 310.

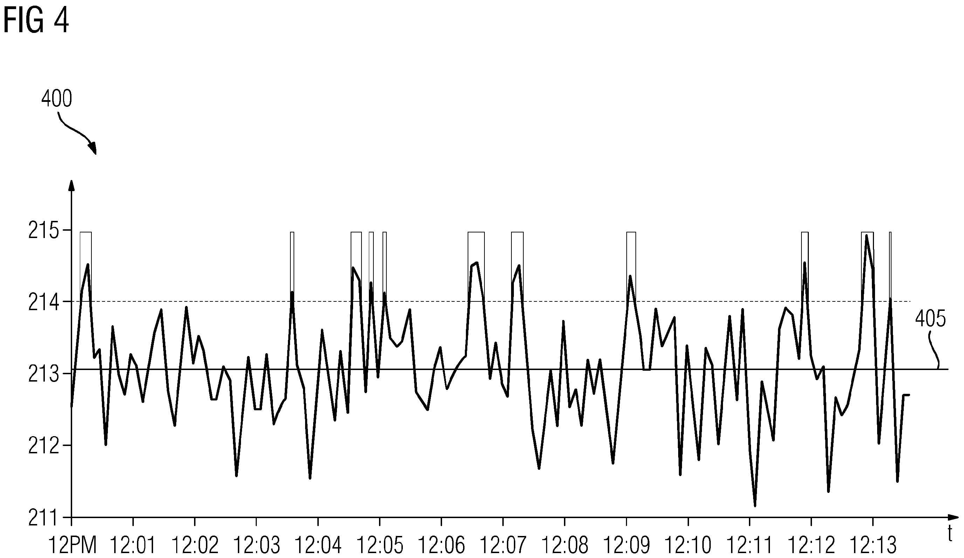

Figure 4 shows a first exemplary application 400 of the architecture of Figure 3. Acquisitions of an exemplary time series are tested to lie below a predetermined threshold 405. Acquisitions under the threshold 405 may be considered "good" and those above "bad". The threshold 405 can be editable through process 195. Optionally, the threshold 405 may be altered automatically, for instance as a derivative of a moving average or moving median. In addition to checking the acquisitions against hard boundaries, threshold or range check can also be used for checking statistical boundaries in a control chart or boundaries learned from a previous training run (machine learning). Should an acquisition go beyond the threshold (in positive or negative direction), an event may be generated which may contain the time corresponding to the acquisition, an assigned variable name, the value of the acquisition the exceeded bound and/or the direction of trespassing the threshold. For relative small and more precise ranges, once the behaviour or the environment of the asserts changes, the threshold may be reset (manually).

This application may be easy to implement and to use through process 195 and may address peculiarities of the acquired parameter or the process 105 at hand. Interpretation of results may be easy and data 150 pre-processed this way may be easily processed further.

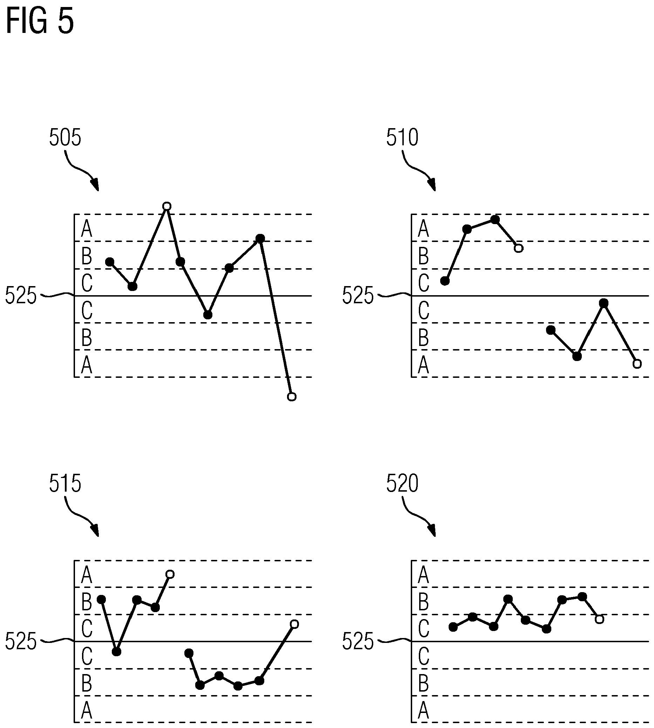

Figure 5 shows a second application of the architecture 300 indicated in Figure 3. A first graph 505 shows an illustration of Western Electric rule 1, a second graph 510 of rule 2, a thirs graph 515 of rule 3 and a fourth graph 520 of rule 4. Western Electric rules are designed to detect anomalies in time series data and may be used to validate acquisition data 150 in validator 320.

In graphs 505 through 520 a horizontal axis corresponds to time and a vertical axis to a standard deviation from a centreline 525, which may for instance be represented by a desired value or an average value. Zone A extends between $2\sigma$ from the centreline and the control limit ($3\sigma$), zone B between $1\sigma$ and $2\sigma$ from the centreline 505 and zone C within $1\sigma$ of the centreline. Zones A, B, and C are sometimes called the three sigma zone, two sigma zone, and one sigma zone, respectively. In a variant (Tukey) instead of mean the median is used and a quantile measure for the control limits. Hampel uses also median but the median absolute deviation (MAD) for the control limits.

The first Western Electric rule (cf. graph 505) generates an event if any single acquisition falls outside the $3\sigma$ limit from the centreline 505. The second rule (cf. graph 510) generates an event if two out of three consecutive acquisitions fall beyond the $2\sigma$ limit (in zone A or beyond), on the same side of the centreline 505. The third rule (cf. graph 515) generates an event if four out of five consecutive acquisitions fall beyond the 1σ limit (in zone B or beyond), on the same side of the centreline 505. The fourth rule (cf. graph 520) generates an event if eight consecutive acquisitions fall on the same side of the centreline 505 (in zone C or beyond). Each generated event may lead to a notification as described above.

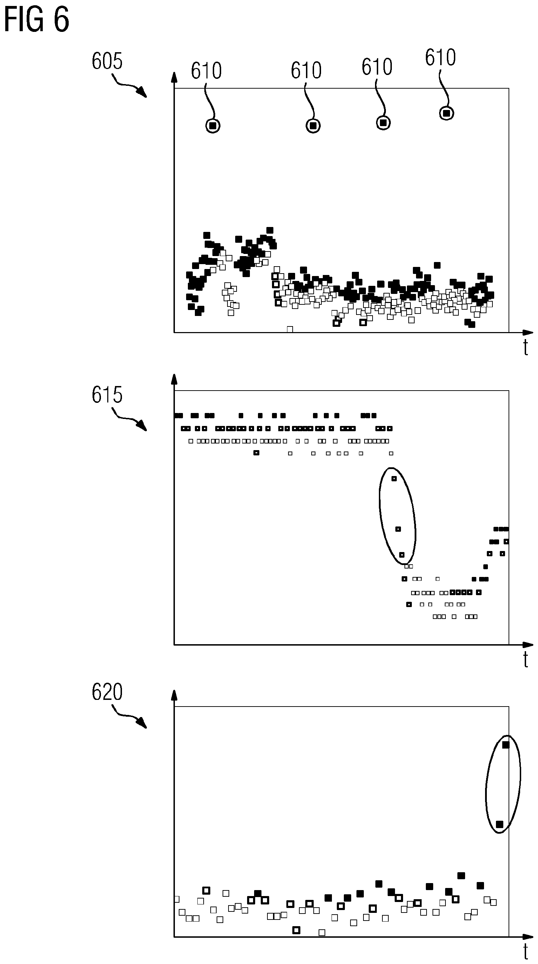

The shown rules may be applied to acquisitions of data 150 in order to detect various common data problems, some of which are shown in Figure 6.

A first graph 605 shows exemplary time series acquisitions comprising outliers 610. An outlier 610 can be a data quality problem as well as a real problem in the observed process. It is preferred to perform outlier 610 detection as an early test in a series of tests because some other tests require their data to be clean of outliers 610.

Outlier 610 detection may be run in manual, interactive or automatic modes. Even though automatic outlier detection may generally perform very well it is preferred to leave the final decision to a human domain expert. It is therefore preferred to present outlier candidates in a suitable user interface; a control chart with upper and lower limit boundaries is a good and well-known tool for that. The outliers 610 in graph 605 may be easily detectable by Western Electric rule 1 (cf. first graph 505 in Figure 5).

For certain industrial processes a sudden step or jump of a variable can be indicator of some serious fault. So it is important to have a mechanism to identify this pattern and be able to mark it in the data stream (e.g. by ingesting an alert event). Like for the range check it is preferred to have statistical measures like mean and standard deviation for the alerting but also for the optional embedding into a control chart.

A second graph 610 shows a sudden drop in exemplary acquisitions. The drop may be detected by each of WE rules 1 or 2. A third graph 615 shows a sudden rise in another exemplary time series of acquisitions. The rise may be detected by WE rule 2. A higher step or drop will always go close to the margin of the control chart and can be implemented by WE rule 1 or 2. Input parameters for this function may comprise the size of the applied sliding window, the chart type (3sigma, WE rule 2) and optionally the step size ($\Delta z$, $\Delta t$) for manual setting.

The jump or step does not have the extend of an outlier 610. A step can also manually defined as ($\Delta z$, $\Delta t$). In contrast to an outlier 610, the jump is part of the process 105. If outliers 610 have not been removed before step / drop detection they can cause false alarms.

In many cases noise consists of small changes in the data caused by inaccurate measurements (not by the process 105 itself). Ignoring the noise in time series acquisitions can lead to various problems. For instance, the data 150 may get artificially bloated due to a bad for compression but also due to data analytics. Also, due to incorrect semantics jumps and slopes between consecutive data points may have bad impact on successive data analytics. In some applications it is useful to analyse noise in the data 150 before applying noise reduction. In audio signal processing as well as image processing the Signal-to-Noise Ratio (SNR) is a common approach. Better results have been achieved by another statistical approach, which observes standard deviation on the absolute distance to mean (pADTM). For high variance data 150, the use of centred sliding windows is very much recommended.

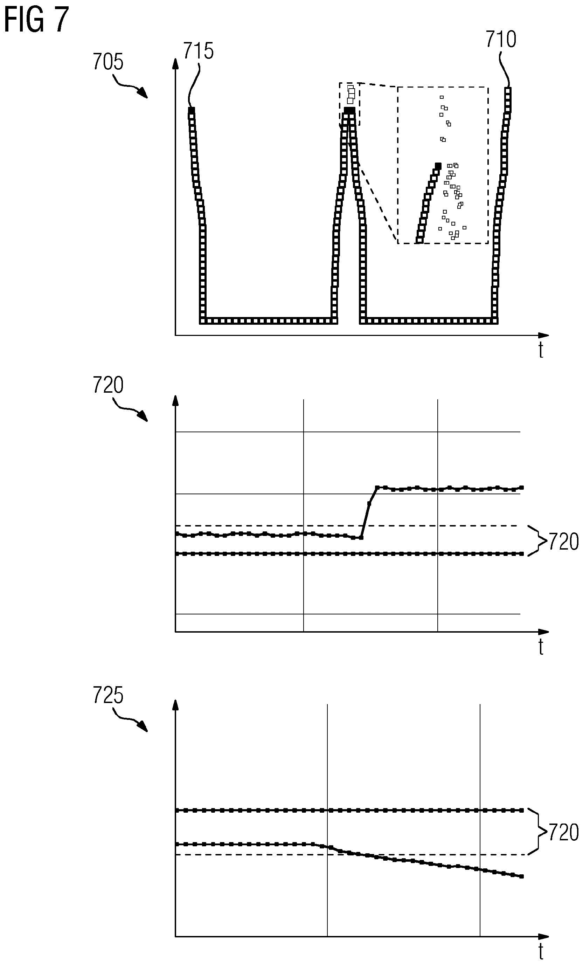

Figure 7 shows more exemplary problems on figurative data. A first graph 705 shows first time series acquisitions 710 with noise and second time series acquisitions 715 without noise. A section of both acquisition series 710, 715 is additionally shown enlarged. For the first series 710, 10% white noise was added to the values of the second series 715. The classification accuracy based on ρADTM shows very good 99,2% on this difficult data set. Noise reduction can also be used in online mode (streaming), though the cantered window may require a certain look-ahead, which may cause a latency in noise detection / removal.

Noise can be determined with a simple 2-step statistical approach. In a first step, the absolute difference to the mean(ADTM)in a first sliding window is calculated. In a second step the standard deviation ρ(ADTM) in a second sliding window is determined. Both windows shall be cantered and have length m. then, a threshold Noise ≈ 0.6 (needs too be adjusted based on data 150) may be defined. Data 150 may be considered noise if (and only if) ρ(ADTM) > Tnoise. The formula for the mean in a centred sliding window is:

$$centered\_mean(y_x) = \frac{1}{m} \sum_{i=\frac{m-1}{2}}^{\frac{m-1}{2}} y_{j+i} \quad ,$$

wherein

$$\frac{m-1}{2} \leq j \leq n - \frac{m-1}{2} \quad .$$

Though this heuristic has shown good results even on high-variance data, the detection of noise may be hard task and require human domain expert knowledge.

A second graph 720 of Figure 7 shows exemplary data 150 with a step (cf. graphs 615 and 620 of Figure 6) and a third graph 725 shows exemplary data 150 with a trend that is caused by a changing bias. In both graphs 720, 725, a deviation threshold 720 is given. A anomaly may be detected and an event be generated if the change in the data 150 time series exceeds the deviation threshold 720.

Signal values of a variable should generally not deviate too much from an expected temporal pattern that represents normal behaviour of the assets with a given environmental setup. The pattern can be a constant, a linear function, a nonlinear function e.g. sinus or even more complex function. In contrast to single outliers 610 and spikes, bias alert focuses on change of a pattern or trend. For instance, a bias event may be generated if the signal values continuously exceed a predefined (linear) deviation threshold 720.

This determination may be fault tolerant and any kind of bias may be captured easily. A bias may be recognised on the basis of a spectral distribution of a signal.

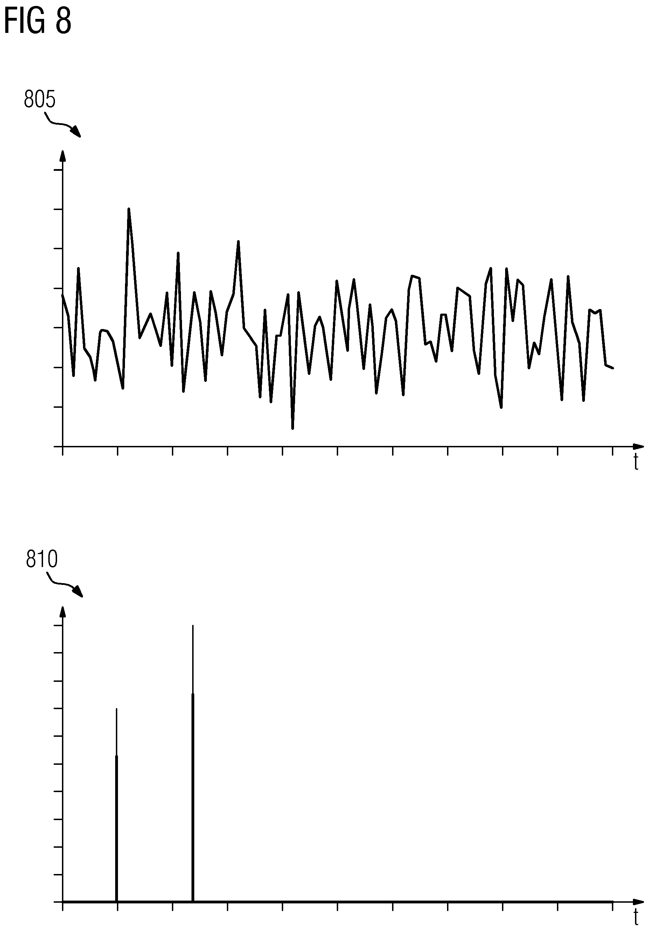

Figure 8 shows more exemplary data 150 in a first graph 805 and a second graph 810. The second graph 810 represents a distribution of frequencies of said data 150 of the first graph 805. The frequencies may be determined via Discrete Fourier Transformation (DFT) or preferred through its more efficient variant Fast Fourier Transformation (FFT). Should one of the determined frequencies change, a corresponding event may be generated.

Discrete Fourier Transformation (DFT) transforms discrete sequences of signal values from temporal space into frequency space in which the main characteristics of the sequences are kept. In this transformed space, given a predefined similarity or dissimilarity measure, the similarity of two sequences may be calculated thus:

$$similarity(S1, S2) = cosine(FFT(S1), FFT(S2))$$

where cosine is the cosine similarity of the transformed sequences S1 and S2. WE rule 4 is a control chart based approach for finding a bias.

Bias may be also caused by intended changes of the environmental setup, e.g. acceleration of the speed of the motor. Such changes can become known, in case the setup information is explicitly made available or by correlation analysis. Computational complexity for finding bias: $O(n \log n)$, where n is the number of data points.

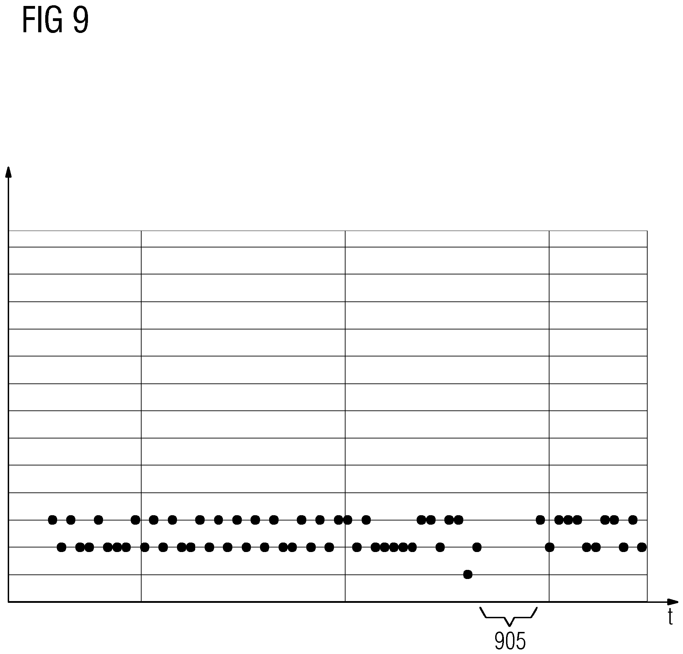

Figure 9 shows exemplary data 150 comprising a data gap 905. A data gap 905 may be detected if, for a period of time that exceeds a predetermined length, data 150 is missing or invalid. This determination relies on data 150 that is periodic with a fixed data frequency or has a lower limit to its data frequency. Optionally, the gaps 905 of a stream s can be filled by time-stamped missing values, for instance through linear, polynomial or other interpolation.

Time series data can have various problems with incomplete data 150. It may be a requirement to deal with exceptions like time gaps to periodic incoming data 150 with equidistant time stamps in the data stream. Also a data point (acquisition) may have a missing value. Moreover, the values could have mixed (or missing) unit and wrong format. For correlation of data streams from different sources a stream of data without gaps my be required. Irregularly spaced time series may need to be mapped before. Not all data analytics algorithms, especially no rules, may be capable to deal with missing values, therefore it may be mandatory to detect them.

It is proposed to help to cleanse the noise data so that a successive data 150 analysis is alleviated of this task. The proposed method may also be used to judge the data 150 quality.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

**Claims**

1. Method (200) for processing data (150) concerning an industrial process, the method (200) comprising steps of:

   - acquiring (205) a parameter related to the industrial process (105);
   - pre-processing (230) the acquired parameter; and
   - providing (235) the pre-processed parameter, **characterized in that**
   - pre-processing (230) comprises an operation that is carried out solely on said acquired parameter.

2. Method (200) according to claim 1, wherein pre-processing (230) is performed on a plurality of time-related acquisitions of the same parameter.

3. Method (200) according to claim 1 or 2, wherein the parameter is provided in response to a corresponding request.

4. Method (200) according to one of the above claims, wherein pre-processing (230) is performed on acquisitions of a plurality of parameters, each acquisition being related to the industrial process (105) and to time, wherein a plurality of pre-processed parameters are provided, the parameters being related to the same predetermined time span.

5. Method (200) according to one of the above claims, wherein the operation (230) comprises determination of a predetermined condition on the acquired parameter and issuing a signal if the condition is met.

6. Method (200) according to one of the previous claims, wherein the parameter is acquired (205) by means of a sensor (155) and the operation (230) comprises a determination of sensor (155) functionality.

7. Method (200) according to one of the previous claims, wherein the operation (230) comprises a determination whether the acquired parameter lies on a predetermined side of a predetermined threshold.

8. Method (200) according to one of the previous claims, wherein the operation (230) comprises a determination whether the acquired parameter lies off a predetermined majority of acquisitions of said parameter.

9. Method (200) according to one of the previous claims, wherein the operation (230) comprises a determination whether the acquired parameter changes more than a predetermined amount over a predetermined time.

10. Method (200) according to one of the previous claims, wherein the operation (230) comprises a determination whether a variation of acquisitions of the parameter compared to an average value exceeds a predetermined threshold.

11. Method (200) according to one of the previous claims, wherein the operation (230) comprises a determination whether the acquired parameter deviates more than a predetermined amount from a predetermined temporal pattern.

12. Method (200) according to one of the previous claims, wherein the operation (230) comprises a determination whether the time between successive acquisitions exceeds a predetermined amount.

13. Method (200) according to one of the previous claims, wherein the process (105) is controlled on the basis of the pre-processed parameter.

14. System (100) for processing data (150) concerning an industrial process (105), the system comprising:

   - a computing platform (180);
   - the computing platform (180) having a data (150) interface that is connectable, via a wide area data network, to a physical entity (160);
   - wherein the physical entity (160) is adapted to provide an acquisition of a parameter that is related to said process (105);
   - wherein the platform (180) is adapted to carry out a method (200) according to one of the above claims.

15. System (100) according to claim 14, wherein the physical entity comprises a data acquisition unit (160) located in a domain where the process (105) is carried out, the data (150) acquisition unit (160) comprising at least one interface (175) connectable to a sensor (155) that is adapted to acquire said parameter.

# FIG 1

FIG 2

200

205

210

215

220

225

230

235

## FIG 3

# FIG 4

EP 3 511 795 A1

FIG 5

# FIG 6

605

610  610  610  610

615

620

FIG 7

## FIG 8

805

810

# FIG 9

905

**Europäisches Patentamt**
**European Patent Office**
**Office européen des brevets**

# EUROPEAN SEARCH REPORT

Application Number

EP 18 15 1439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/358487 A1 (SHIN KAE YOUNG [KR]) 4 December 2014 (2014-12-04) * the whole document * | 1-15 | INV. G05B23/02 |
| X | US 2017/161963 A1 (GREEN DONNA LOUISE [GB] ET AL) 8 June 2017 (2017-06-08) * the whole document * | 1-15 | |
| X | US 2015/213706 A1 (BAI JIE [JP] ET AL) 30 July 2015 (2015-07-30) * paragraphs [0009] - [0017], [0162] - [0163] * * paragraphs [0131] - [0132]; figures 9A,9B * | 1-15 | |

**TECHNICAL FIELDS SEARCHED (IPC)**

G05B

The present search report has been drawn up for all claims

| Place of search | Date of completion of the search | Examiner |
|---|---|---|
| The Hague | 10 July 2018 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 18 15 1439

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2018

| Patent document cited in search report | | Publication date | Patent family member(s) | | Publication date |
|---|---|---|---|---|---|
| US 2014358487 | A1 | 04-12-2014 | CN | 104216350 A | 17-12-2014 |
| | | | KR | 20140141052 A | 10-12-2014 |
| | | | US | 2014358487 A1 | 04-12-2014 |
| | | | WO | 2014193040 A1 | 04-12-2014 |
| US 2017161963 | A1 | 08-06-2017 | CA | 2938766 A1 | 20-08-2015 |
| | | | EP | 3105644 A1 | 21-12-2016 |
| | | | GB | 2522926 A | 12-08-2015 |
| | | | US | 2017161963 A1 | 08-06-2017 |
| | | | WO | 2015121176 A1 | 20-08-2015 |
| US 2015213706 | A1 | 30-07-2015 | JP | 2014048697 A | 17-03-2014 |
| | | | US | 2015213706 A1 | 30-07-2015 |
| | | | WO | 2014034273 A1 | 06-03-2014 |

EPO FORM P0459

For more details about this annex : see Official Journal of the European Patent Office, No. 12/82